# EUROPEAN PATENT SPECIFICATION

(11) **EP 0 741 065 B1**
(45) Date of publication and mention of the grant of the patent: **20.02.2002**
(21) Application number: 96106394.8
(22) Date of filing: 24.04.1996
(51) Int. Cl.: B60T 7/12, B60T 17/22, B61H 5/00

(54) **Braking device and method for providing a more constant braking force**
Bremsvorrichtung und Verfahren zum Herstellen einer mehr konstanten Bremskraft
Dispositif de freinage et méthode pour établir une force de freinage plus constante

(30) Priority: 05.05.1995 US 436061
(43) Date of publication of application: 06.11.1996
(73) Proprietor: THE B.F. GOODRICH COMPANY, Akron Ohio 44313-1799 (US)
(72) Inventor: Shih, Wei-Teh, Yorba Linda, CAL 92686 (US)
(74) Representative: Selting, Günther, Dipl.-Ing.

(56) References cited:
- EP-A- 0 410 145
- GB-A- 2 212 572
- US-A- 4 971 179

## Description

The invention relates to a device and method for providing a more constant braking force. The braking device and method according to the invention slows a mass moving with an initial speed at the time the braking device is activated. More or fewer braking elements are activated depending on the initial velocity. The device and method minimize variations in average friction coefficient over wide ranges of initial speed, which are typical for many braking materials.

Various types of brakes are known in the art for braking a variety of vehicles. Brakes generally comprise at least a pair of friction elements that rotate relative to each other, and an actuator that forces the frictional elements together to generate a braking torque. Several materials used for friction elements in brakes are well known in the art. Such materials include steel alloys, cast irons, sintered metals, silicon carbide particulate reinforced aluminum, fiber reinforced composites, and semi-metallic and organic brake pads. Suitable fiber reinforced composites include carbon/carbon composite materials, and fiber reinforced ceramic materials.

Carbon/carbon brake friction elements have been used in many aerospace-type applications, particularly disk brakes, because they can operate efficiently at very high temperatures, and carbon/carbon friction elements generally weigh much less than other types of friction elements. These characteristics are very appealing for high speed trains. However, the friction coefficient is generally dependent on initial speed, and the friction coefficient for many materials tends to vary a great amount with changes in initial speed. The variation for many materials, including carbon/carbon, is too great for many applications in which a more constant slowing force over a wide range of initial speeds is desired. The problem is exacerbated in train brakes, which generally do not have a pressure control system and operate in an on or off mode with a constant force applied to the brakes when the brakes are activated. Prior developments by other workers in the train braking art have focused on providing braking materials with the desired braking characteristic: a friction coefficient relatively insensitive to initial speed. This approach, however, has limited the use of several braking materials in train brakes, which have other very desirable characteristics such as light weight and temperature resistance, such as carbon/carbon.

EP 0 410 145 B1 shows an air brake device for rail vehicles having disc brakes as well as block brakes. During the braking process, the proportion of the total brake torque applied by the block brakes is reduced with decreasing travel speed by at least partial release of the block brake in order to avoid damages to the tread of the wheel. This air brake device is designed to reduce wear of the block brakes and the wheel. It has still the drawback that the braking force is not constant over a wide range of initial speeds.

The invention overcomes this problem by activating the brakes according to the invention as defined in claims 1 and 12, and is not limited to braking materials having friction coefficients that are relatively insensitive to initial speed. The invention is manifested in both devices and methods, and greatly broadens the range of braking materials for use in high speed trains.

The braking device and method according to the invention provides a more constant braking force over a wide range of initial speeds, and greatly broadens the range of braking materials for use in high speed trains.

By way of an example, the invention will now be described with reference to the accompanying drawings, in which:

FIG-1 presents a side schematic view of a high-speed train embodying the invention.

FIG-2 presents a plot of friction coefficient versus mean brake speed for a variety of carbon/carbon disk brakes.

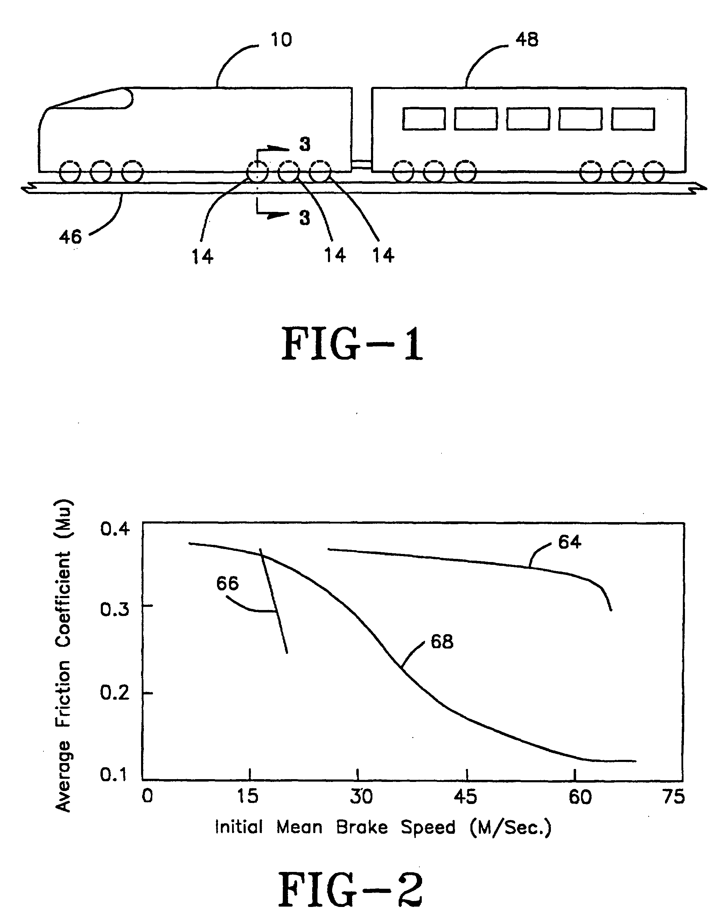

FIG-3 presents a sectional view of a brake device according to the invention along line 3-3 of Figure 1.

FIG-4 presents an alternate embodiment having multiple braking elements that share a single rotor.

FIG-5 presents a schematic of a control system according to an aspect of the invention.

FIG-6 presents a plot of average friction coefficient versus initial speed for a typical carbon/carbon disk brake.

FIG-7 presents a plot of total slowing force versus initial speed and a method for controlling the brake device, according to the invention.

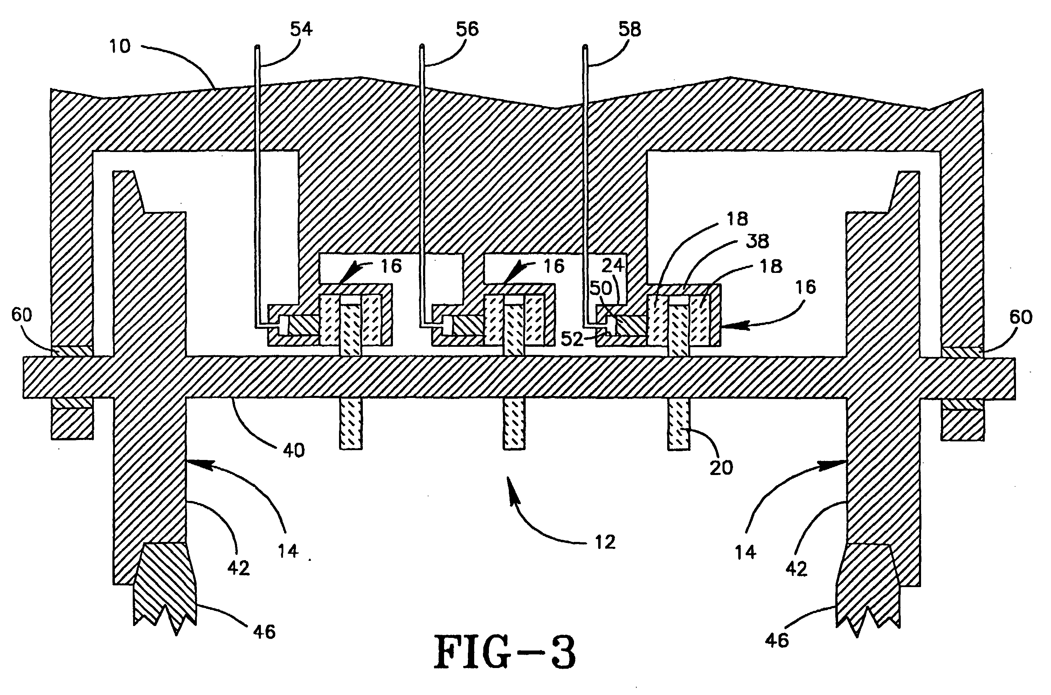

A braking device for slowing a mass according to the invention is generally illustrated in Figures 1-7, wherein like components in the various views are numbered alike. Referring specifically to Figure 1, a mass 10 is shown moving on a plurality of rotating wheel structures 14 attached to the mass 10. In the example presented, the mass 10 is a train locomotive moving on a pair of rails 46, but the mass 10 could also be a train car 48 or other type of mass. Referring now to Figure 3, a sectional view of the mass 10 and the wheel structure 14 along line 3-3 of Figure 1 is presented, along with a sectional view of a braking device 12 according to an aspect of the invention. Braking device 12 comprises a plurality of braking elements 16. Each braking element 16 comprises friction elements 18 and 20, with at least one friction element 18 attached to the mass 10, and at least one friction element 20 attached to the wheel structure 14. The slowing force is developed by pressing the friction elements together with a force with an independently controlled actuator 24. Thus, "braking element" means an independently controlled apparatus that generates a slowing force on the mass 10.

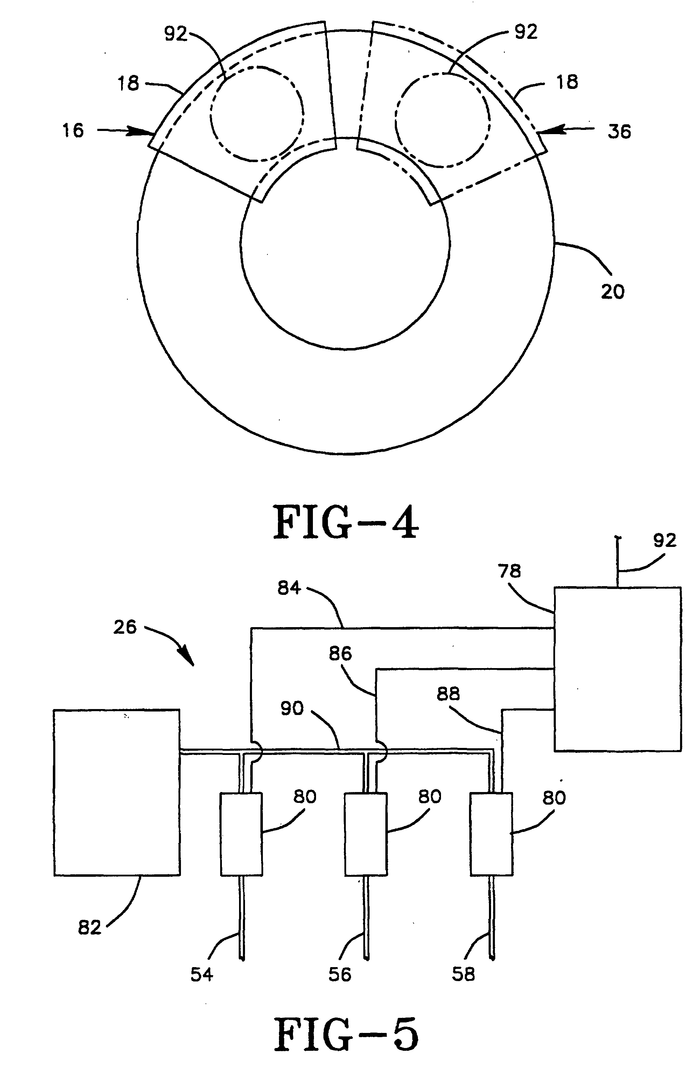

In Figure 3, the friction element comprises at least two stators 18 engaged against rotation to the mass 10, and at least one rotor 20 engaged against rotation to one of the wheel structures 14 disposed between two of the stators 18. The stators 18 engage the mass 10 in a manner that permits the stators 18 to move toward and away from the rotor 20. At least one actuator 24 is configured to force the stators 18 against the rotor 20 which activates the braking element 16 and generates the slowing force. All of the activated braking elements 16 together provide a total slowing force. In Figure 4, braking device 12 has only three braking elements 16 attached to a single wheel structure 14. However, far more than only three braking elements 16 may be provided depending on the desired total slowing force, and one or more braking elements 16 may be attached to one or more wheel structures 14. For example, the braking elements 16 of Figure 3 could be attached to three wheel structures 14, with only one braking element 16 per wheel structure 14. Alternatively, for example, three braking elements 16 may be attached to one wheel structure 14, two braking elements 16 may be attached to another wheel structure 14, and four braking elements 16 may be attached to yet another wheel structure 14. Innumerable combinations are thus contemplated in the practice of the invention.

In the example shown in Figure 3, braking elements 16 are a "caliper-type" brake that have only one rotor 20 and two stators 18. Each stator 18 extends only partially around the circumference of the rotor 20. Caliper-type brakes are well known in the art. The wheel structure 14 has an axle 40 extending between two wheels 42, and the rotor 20 is attached to the axle 40. The axle 40 is mounted to the mass 10 within a pair of bearings 60. Suitable means are well known in the art for mounting the rotor 20 to the axle 40 and for mounting a pair of stators within the caliper 38 in a manner that permits the stators 18 to move toward and away from the rotor. The stators 18 are engaged against rotation to the caliper 38, and the caliper 38 is engaged against rotation to the mass 10. The actuator 24 forces each stator 36 against the one rotor 20 which generates a frictional force at the interfaces between the stators 36 and rotor 20. In a caliper-type brake, a caliper 38 engages the far stator 36 and cooperates with the actuator 24 in pressing together the stators 36 and rotor 20, thus permitting use of a single actuator 24 per braking element 16. Various caliper arrangements are known in the art. The frictional force at the interface generates a slowing torque that acts about the axle 40 opposite to the direction of rotation of the axle 40 and wheels 42. The wheels 42 convert the slowing torque to a slowing force that acts in a direction opposite to the motion of mass 10, thereby causing the mass 10 to decelerate.

According to a preferred embodiment, each actuator 24 comprises a piston 50 sealed within a bore 52 in a manner that permits the piston 50 to move toward and away from the stator 18. A hydraulic or pneumatic line 54, 56, or 58 supplies pressurized fluid to each bore 52 which forces each piston 50 toward the corresponding stator 18. Other types of actuators, including electromagnetic actuators, are equally suitable for use with the invention. Each braking element 16 is deactivated by removing pressure from each bore 52 which permits the piston 50 to be forced away from the stators 18 by a spring, or by reversing pressure within the bore 52, or by any other means known in the art. The operation of caliper-type disk brakes, as described thus far, is well known in the art.

Though described in relation to a caliper-type disk brake, the invention is also useful with other types of braking elements, including full-circle disk brakes, drum brakes, and other types of brakes known in the art. Full-circle disk brakes are commonly used for braking aircraft, and the stators extend around the full circumference of the rotors. In drum brakes, the frictional elements comprise brake shoes and drums, as is well known in the art of braking.

Referring now to Figure 2, average friction coefficient (Mu) versus initial mean brake speed is shown for three types of disk brakes having carbon/carbon rotors and stators. The friction coefficient actually varies to a limited degree as the mass slows. The average friction coefficients presented in Figure 2 represent an average over the range of speeds from a given initial speed to a full stop. Initial speed refers to the speed of the mass immediately before deceleration induced upon activation of one or more braking elements. The friction coefficient is defined as the slowing force divided by the activation force applied to press together the rotors and stators (normal to the frictional interface). The activation force will be indicated by the letter "P" herein. Mean brake speed is the linear speed of the rotor relative to the stator at the midpoint between the inside and outside diameter of the annular frictional interface where the rotor contacts the stators. Mean brake speed is the product of axle rotational speed and the radius from the centerline of the axle to the midpoint of the annular frictional interface. The slowing force is the slowing torque generated by the brake divided by the mean radius of the friction interface from the center of rotation.

Still referring to Figure 2, curve 64 represents a typical caliper-type disk brake. Curve 66 represents a typical full-circle disk brake. Curve 68 represents a braking device having three full-circle disk brakes mounted on a single axle for a high speed magnetic levitation train. Note that friction coefficient tends to increase as mean brake speed decreases, and that friction coefficient versus mean brake speed changes much less in a caliper-type disk brake (curve 64) than in the a full-circle disk brake (curves 66 and 68). Thus, a caliper-style disk brake has a more stable friction coefficient and is preferred. Each braking element may be a caliper-style disk brake in a braking device according to the invention. The rotational speed of the axle is directly related to the speed of mass 10 (Figure 1). Specifically, the rotational speed of the axle 14 (Figure 3) is the speed of mass 10 (Figure 1) divided by the radius of wheel 42 (Figure 3). Therefore, slowing force tends to increase as the speed of mass 10 decreases. In addition, slowing force provided by each braking element is further dependent on a quantity of kinetic energy absorbed by the braking element. The slowing force decreases as the quantity increases, and increases as the quantity decreases.

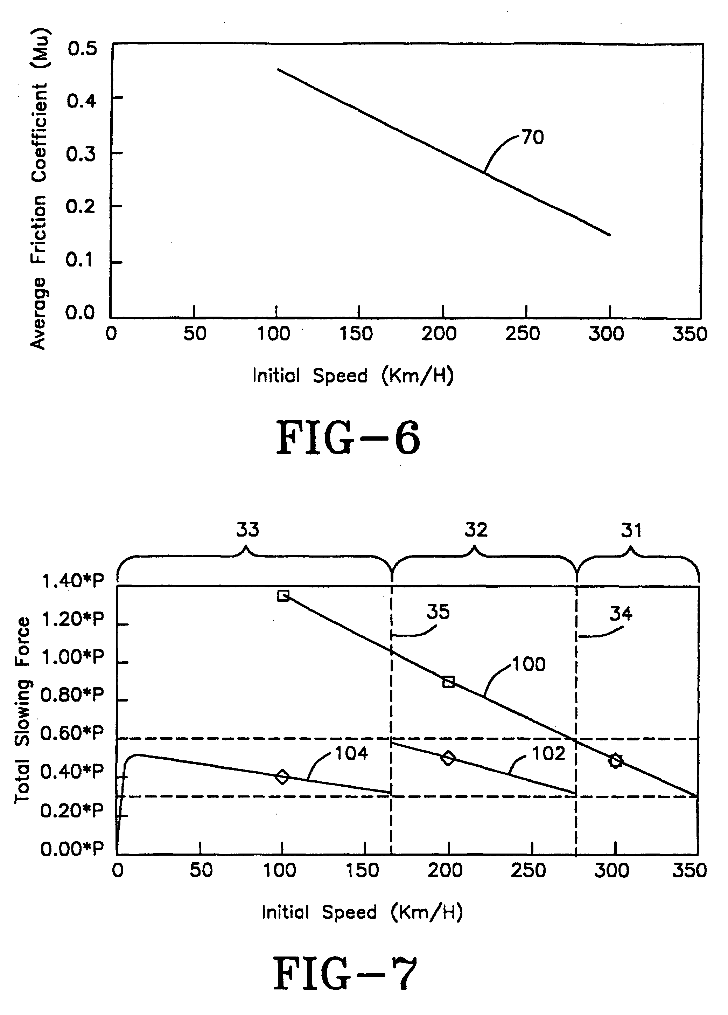

A relatively stable or constant slowing force over a wide range of initial speeds is generally desired in a train braking system. As demonstrated by curve 68 of Figure 2, friction coefficient may vary 300% or more over a total range of initial speeds from about 225 Km/H to about 25 Km/H with a constant activation force P. This variation is generally unacceptable for high speed trains, which require a variation of about 100% or less over the same range. In addition, the total range of initial speeds can include initial speeds of 350 Km/H or higher. This is further demonstrated by Figure 6, which shows a typical curve of average friction coefficient versus initial speed for a single braking element having carbon/carbon friction elements. Note that average friction coefficient is dependent on initial speed such that the friction coefficient decreases as the initial speed increases and increases as the initial speed decreases. The slowing force developed by this braking element follows the same trend since it is directly related to friction coefficient and activation force (Slowing Force = Mu*P). The variation demonstrated by Figure 6 is typical for many braking materials.

These effects are minimized by activating the braking elements in the novel manner demonstrated by the following examples.

### EXAMPLE 1

Assume three braking elements are activated simultaneously with a constant activation force P, as taught by the prior art. Each braking element has a braking characteristic as depicted in Figure 6. At an initial speed of 300 Km/H, Mu is 0.15. Therefore, total slowing force is 3*.15*P which equals 0.45*P. At an initial speed of 200 Km/H, Mu is 0.30. Total slowing force is 3*0.30*P which equals 0.90*P. At 100 Km/H, Mu is 0.45. Total slowing force equals 3*0.45*P which equals 1.35*P. These values are presented on Table 1, as follows, and as curve 100 on Figure 7.

**TABLE 1**

| Force | Initial Speed (Km/H) | Total Slowing Force |
|---|---|---|
| | 300 | 0.45*P |
| | 200 | 0.90*P |
| | 100 | 1.35*P |

### EXAMPLE 2

According to the invention, three braking elements may be activated at an initial speed of 300 km/h (slowing force 0.45*P) and only two braking elements may be activated at an initial speed of 200 Km/H. According to Figure 6, Mu at the speed of 200 km/h is 0.30. However, only two brakes are absorbing the kinetic energy of the mass which forces those brakes to run hotter, and reduces the average friction coefficient from those indicated in Figure 6. The reduced friction coefficient must be determined by experiment, but may be estimated here as 0.25. Therefore, total slowing force is 2*0.25*P which equals 0.50*P. According to a further aspect of the invention, only one braking element may be activated at an initial speed of 100 Km/H. According to Figure 6, Mu at this initial speed is 0.45 but, again, will have a slightly lesser value since the single braking element is now absorbing all of the kinetic energy, and can be estimated at about 0.40. Total slowing force is 1*0.40*P which is 0.40*P. These values are presented on Table 1, as follows, and as data points on Figure 7.

**TABLE 2**

| Force | Initial Speed (Km/H) | Total Slowing Force |
|---|---|---|
| | 300 | 0.45*P |
| | 200 | 0.50*P |
| | 100 | 0.40*P |

A comparison of these Examples demonstrates that the total slowing forces presented on Table 2 are far more constant than the total slowing forces presented on Table 1. Referring now to Figure 7, a plot of total slowing force versus initial speed is presented, along with a braking method for slowing a mass 10 moving with an initial speed. A total slowing force on the mass 10 is generated by activating a first set of braking elements over a first range of initial speeds 31 and a second set of braking elements 16 over a second range of initial speeds 32. The transition from the first range 31 to the second range 32 occurs at the initial speed 34. The initial speeds within first range 31 are greater than the initial speeds within second range 32. According to the Examples, the first set may include three braking elements if the initial speed falls within first range 31, and the second set may include two braking elements if the initial speed falls within second range 32, thereby causing a transition from curve 100 to curve 102 at the initial speed 34. The total slowing force in range 32 represented by curve 102 is much closer to the total slowing force in range 31 than the first set of braking elements alone would provide over both ranges, as indicated by curve 100. Thus, according to an aspect of the invention, each of the braking elements 16 generates a slowing force on the mass 10 when activated, the slowing force being dependent on the initial speed such that the slowing force decreases as the initial speed increases and increases as the initial speed decreases, and the second set includes fewer braking elements 16 than the first set in order to provide a more constant total slowing force over the first and second ranges 31 and 32 than the first set alone would provide over the first and second ranges 31 and 32.

The total slowing force is further modified from curve 100 by activating at least a third set of braking elements over at least a third range of initial speeds. The speeds in the second range 32 are greater than the speeds in the third range 33. According to the Examples, the third set may include only one braking element if the initial speed falls within first range 33, thereby resulting in a transition from curve 102 to curve 104 at initial speed 35. The total slowing force in range 33 represented by curve 104 is much closer to the total slowing force in ranges 31 and 32 than the first set of braking elements alone would provide over first, second and third ranges 31, 32 and 33, as indicated by curve 100. Thus, the third set including at least one less braking element than the second set in order to provide a more constant total slowing force over the first, second and third ranges 31, 32 and 33 than said first or second sets alone would provide over said first, second and third ranges 31, 32 and 33.

Though described in the Examples with only three ranges and three braking elements, any number of ranges and braking elements may be provided as necessary to provide a total slowing force within a desired range of slowing force over a wide range of initial velocities. According to a preferred embodiment, the total slowing force varies less than plus or minus 60%, and may vary less than plus or minus 30%, from an average total slowing force over the first and second ranges of initial speeds 31 and 32. In Figure 7, the total slowing force is maintained between 0.30*P and 0.60*P over a range of initial speed from about 25 Km/H to 350 Km/H.

The desired range of slowing force varies with the application, and is generally specified by the vehicle manufacturer. The invention is particularly useful for braking trains, which generally utilize an on or off system with a constant activation force P. In such a system, the force P is generally constant over all the ranges of initial speeds, including the first, second, and third ranges. A constant slowing force is simpler to implement, and maintains passenger safety and comfort as the train is slowed. Pertinent considerations in determining a desired slowing force include the minimum slowing force necessary to stop the train in an emergency while maintaining passenger safety and comfort, and the friction coefficient between the wheels 42 and rails 46 (Figure 3). Skidding between the wheels 42 and rails 46 during a stop is highly undesirable.

The first, second and third ranges of initial speeds 33, 32 and 31 need not be fixed in the practice of the invention. According to a preferred embodiment, these ranges are fixed through experiment, and the first set is activated if the initial speed is greater than a first predetermined speed 34. The second set of braking elements are activated if the initial speed is less than the first predetermined speed 34 and greater than a second predetermined speed 35, and the third set of braking elements is activated if the initial speed is less than the second predetermined speed 35. The first and second predetermined speeds 34 and 44 are determined by experiment, and will depend on the characteristics of the particular disk brake and desired slowing force range versus speed. Again, any number of braking elements and predetermined speeds may be provided, depending on the total slowing force required, and the desired slowing force ranges versus speed.

Referring now to Figure 4, an alternative embodiment of the invention is presented wherein braking element 36 may combined with one or more of the braking elements 16 of braking device 12 (Figure 3). Each braking element 16 and 36 comprise a pair of stators 18 attached to the mass 10 (Figure 3). The braking elements 16 and 36 share a single rotor 20 attached to the wheel structure 14 (Figure 3) disposed between the stators 18. Braking element 36 also comprises a caliper 38 (not shown) and an actuator 24 (not shown), and is attached to mass 10, similar to braking element 16 of Figure 3. Each actuator 24 is configured to independently force a pair of stators 18 against a single rotor 20. Thus, each braking element 16 and 36 is independently controlled, and each independently generate a slowing force while sharing a single rotor 20. Multiple braking elements may be configured as shown in Figure 4, and two or more braking elements may share a single rotor. Operation of the Figure 4 embodiment, according to an aspect of the invention, is further demonstrated by the following examples.

### EXAMPLE 3

Assume six braking elements are activated simultaneously with a constant activation force P, as taught by the prior art. The six braking elements are arranged in three groups of two, with each group sharing a rotor, as shown in Figure 4. In addition, assume that the friction coefficient provided by each braking element is 0.5 at 100 Km/H, 0.3 at 200 Km/H, and 0.1 at 300 Km/H. At an initial speed of 300 Km/H, total slowing force is 6*0.1*P which equals 0.6*P. At an initial speed of 200 Km/H, total slowing force is 6*0.30*P which equals 1.8*P. At 100 Km/H, total slowing force equals 6*0.5*P which equals 3.0*P. These values are presented on Table 3.

**TABLE 3**

| Force | Initial Speed (Km/H) | Total Slowing Force |
|---|---|---|
| | 300 | 0.6*P |
| | 200 | 1.8*P |
| | 100 | 3.0*P |

### EXAMPLE 4

At 300 Km/H, all six braking elements are activated, as in Example 3, resulting in a total slowing force of 0.6*P. According to an aspect of the invention, only one braking element in each group may be activated at an initial speed of 200 Km/H, for a total of three braking elements. The friction coefficient for each braking element is different than in Example 3 because, here, only one braking element in each group is activated (only one pair of stators 18 rather than two pairs of stators 18 per rotor 20). This causes the friction coefficient to increase slightly to 0.35 at 200 Km/H, and 0.35 Km/H at 100 Km/H. At an initial speed of 200 Km/H, total slowing force is 3*0.35*P which equals 1.05*P. Only three braking elements may be similarly activated at an initial speed of 100 Km/H, resulting in a total slowing force of 3*0.55*P which equals 1.65*P. These values are presented on Table 4.

**TABLE 4**

| Force | Initial Speed (Km/H) | Total Slowing Force |
|---|---|---|
| | 300 | 0.60*P |
| | 200 | 1.05*P |
| | 100 | 1.65*P |

A comparison of Tables 3 and 4 shows that the total slowing forces provided by Example 4 are far more constant over the range of initial speeds than the total slowing forces provided by Example 3. Though described in relation to only six braking elements, the invention may be applied to any number of braking elements. In addition, the sets of braking elements may include any number of braking elements. Finally, any number of sets with corresponding ranges of initial speed may be provided. Any such variations are considered to fall within the purview of the invention.

Referring now to Figure 5, a control system 26 configured to accomplish the previously described method is presented. Control system 26 is configured to control activation of braking elements 16 (Figure 3) via pneumatic or hydraulic control lines 54, 56, and 58, which are attached to actuators 24 (Figure 3). However, control system 26 could also be configured to control other types of actuators, including electromagnetic actuators. Control system 26 comprises a controller 78, control valves 80, and control lines 84, 86 and 88. In a pneumatic or hydraulic system, a pressure reservoir 82 may be provide which supplies pressurized fluid to the control valves 80 via supply line 90. A speed sensing line 92 may be provided which communicates with a transducer or a control console for sensing the speed of mass 10 (Figure 1). The controller is configured to control the control valves 80 as required to activate the braking elements 16 (Figure 3) via actuator control lines 54, 56 and 58, according to the method previously described herein. The controller may be programmed to read an initial speed from speed sensing line 92, and compare the initial speed to a plurality of initial speed ranges. The controller then decides which range the initial speed falls into, and activates the corresponding set of braking elements by energizing the corresponding control valves 80.

Finally, variations in instantaneous slowing force may occur as the mass slows. Such variations may be due to heating of the braking elements and tribological effects at the frictional interface. According to a further aspect of the invention, one or more braking elements may be activated or deactivated after activation of the first, second or third sets of braking elements (or more) in order to provide a more uniform instantaneous total slowing force as the train slows. The control system 26 may be configured to activate or deactivate braking elements according to this method.

## Claims

1. A braking device for slowing a mass (10) moving with an initial speed and a plurality of rotating wheel structures (14) attached to the mass (10), comprising:
a plurality of braking elements (16), each of said plurality of braking elements (16) generating a slowing force on the mass (10) when activated, said slowing force being dependent on an activation force (P) and the friction coefficient (Mu) which is dependent on the initial speed such that said slowing force decreases as the friction coefficient (Mu) decreases that is as the initial speed increases and such that said slowing force increases as the friction coefficient (Mu) increases that is as the initial speed decreases;
wherein a total slowing force is generated by activating a first set of said braking elements (16) if the initial speed is within a first range of initial speeds (31) and a second set of braking elements (16) if the initial speed is within a second range of initial speeds (32), the speeds within said first range (31) being greater than the speeds within said second range (32), said second set including at least one less braking element (16) than said first set in order to provide a more constant total slowing force over said first and second ranges (31,32) than said first set alone would provide over said first and second ranges (31,32),
**characterized by**
at least a third set of said braking elements (16) activated over at least a third range of initial speeds (33), the initial speeds in said second range (32) being greater than the initial speeds in said third range (33), said third set including at least one less braking element (16) than said second set in order to provide a more constant total slowing force over said first, second and third ranges (31,32,33) than said first or second sets alone would provide over said first, second and third ranges (31,32,33).

2. The device of claim 1, wherein said total slowing force varies less than plus or minus 60 % from an average total slowing force over said first and second ranges of initial speeds (31,32).

3. The device of claim 1, wherein said total slowing force varies less than plus or minus 30 % from an average total slowing force over said first and second ranges of initial speeds (31,32).

4. The device of claim 1, wherein said first set is activated if the initial speed is greater than a first predetermined speed (31).

5. The device of claim 1, wherein said slowing force provided by each of said plurality of braking elements (16) is further dependent an a quantity of kinetic energy absorbed by said braking element (16), said slowing force decreasing as said quantity increases and increasing as said quantity decreases.

6. The device of claim 1, wherein at least one braking element (16) is activated or deactivated as the mass slows after activation of said first, second, or third set (31,32,33).

7. The device of claim 1, wherein said first set of braking elements (16) is activated if said initial speed is greater than a first predetermined speed (34), and said second set of braking elements (16) is activated if said initial speed is less than said first predetermined speed (34) and greater than a second predetermined speed (35).

8. The device of claim 1, wherein each braking element (16) comprises at least one friction element (18) attached to the mass (10), and at least one friction element (20) attached to the wheel structure (14), and said slowing force is developed by pressing said friction elements (18,20) together with a force (P), said force (P) being generally constant over said first and second ranges (31,32).

9. The device of claim 1, wherein each of said plurality of braking elements (16) comprises a pair of stators (18) attached to the mass (10) and a single rotor (20) attached to the wheel structure (14) disposed between said stators (18), and an actuator (24) configured to force said stators (18) against said rotor (20).

10. The device of claim 1, wherein at least a first and second braking element (16) each comprise a pair of stators (18) attached to the mass (10) and sharing a single rotor (20) attached to the wheel structure (14) disposed between said stators (18), and an actuator (24) configured to independently force each pair of stators (18) against said shared rotor (20).

11. The device of claim 1, wherein at least one braking element (16) is activated or deactivated as the mass (10) slows after activation of said first or second set.

12. A braking method for slowing a mass (10) moving with an initial speed and a plurality of rotating wheel structures (14) attached to the mass (10), comprising the steps of:
generating a total slowing force on said mass (10) by activating a first set of braking elements (16) over a first range of initial speeds (31)and a second set of braking elements (16) over a second range of initial speeds (32), each of said braking elements (16) generating a slowing force an the mass (10) when activated, said slowing force being dependent on an activation force (P) and the friction coefficient (Mu) which is dependent on the initial speed such that said slowing force decreases as the friction coefficient (Mu) decreases that is as the initial speed increases and such that said slowing force increases as the friction coefficient increases that is as the initial speed decreases, said second set including fewer braking elements (16) than said first set in order to provide a more constant total slowing force over said first and second ranges (31,32) than said first set alone would provide over said first and second ranges (31,32),
**characterized by**
the step of activating at least a third set of said braking elements (16) over at least a third range of initial speeds (33), the speeds in said second range (32) being greater than the speeds in said third range (33), said third set including at least one less braking element (16) than said second set in order to provide a more constant total slowing force over said first, second and third ranges (31,32,33) than said first or second sets alone would provide over said first, second and third ranges (31,32,33).

13. The method of claim 12, wherein said total slowing force varies less than plus or minus 60 % from an average total slowing force over said first and second ranges of initial speeds (31,32).

14. The method of claim 12, wherein said total slowing force varies less than plus or minus 30 % from an average total slowing force over said first and second ranges of initial speeds (31,32).

15. The method of claim 12, further comprising the step of activating said first set if the initial speed is greater than a first predetermined speed (34).

16. The method of claim 12, wherein said slowing force provided by each of said plurality of braking elements (16) is further dependent an a quantity of kinetic energy absorbed by said braking element (16), said slowing force decreasing as said quantity increases and increasing as said quantity decreases.

17. The method of claim 12, further comprising the step of activating or deactivating at least one braking element (16) as the mass (10) slows after activation of said first, second, or third set (31,32,33).

18. The method of claim 12, further comprising the steps of activating said first set of braking elements (16) if said initial speed is greater than a first predetermined speed (34), and activating said second set of braking elements (16) if said initial speed is less than said first predetermined speed (34) and greater than a second predetermined speed (35).

19. The method of claim 12, wherein each braking element (16) comprises at least one friction element (18) attached to the mass (10), and at least one friction element (20) attached to the wheel structure (14), and said slowing force is developed by pressing said friction elements (18,20) together with a force (P), said force (P) being generally constant over said first and second ranges (31,32).

20. The method of claim 12, wherein each of said plurality of braking elements (16) comprises a pair of stators (18) attached to the mass (10) and a single rotor (20) attached to the wheel structure (14) disposed between said stators (18), and an actuator (24) configured to force said stators (18) against said rotor (20).

21. The method of claim 12, wherein at least a first and second braking element (16,36) each comprise a pair of stators (18) attached to the mass (10) and sharing a single rotor (20) attached to the wheel structure (14) disposed between said stators, and an actuator (24) configured to independently force each pair of stators (18) against said shared rotor (20).

22. The method of claim 12, further comprising the step of activating or deactivating at least one braking element (16) as the mass (10) slows after activation of said first or second set (31,32).

## Patentansprüche

1. Bremsvorrichtung zum Verlangsamen einer Masse (10), die sich mit einer Anfangsgeschwindigkeit bewegt, und mehrerer sich drehender Radstrukturen (14), die mit der Masse verbunden sind (10), mit:
mehreren Bremselementen (16), von denen jedes bei Aktivierung eine auf die Masse (10) einwirkende Verlangsamungskraft erzeugt, wobei die Verlangsamungskraft von einer Aktivierungskraft (P) und dem Reibungskoeffizienten (Mu) abhängt, der von der Anfangsgeschwindigkeit abhängig ist, derart, dass die Verlangsamungskraft mit sinkendem Reibungskoeffizienten (Mu), d. h. mit steigender Anfangsgeschwindigkeit, sinkt und derart, dass die Verlangsamungskraft mit steigendem Reibungskoeffizienten (Mu), d. h. mit sinkender Anfangsgeschwindigkeit, steigt;
wobei eine Gesamt-Verlangsamungskraft durch Aktivieren eines ersten Satzes der Bremselemente (16) erzeugt wird, wenn die Anfangsgeschwindigkeit innerhalb eines ersten Bereichs von Anfangsgeschwindigkeiten (31) liegt, und eines zweiten Satzes von Bremselementen (16), wenn die Anfangsgeschwindigkeit innerhalb eines zweiten Bereichs von Anfangsgeschwindigkeiten (32) liegt, wobei die Geschwindigkeiten innerhalb des ersten Bereichs (31) größer sind als die Geschwindigkeiten innerhalb des zweiten Bereichs (32) und der zweite Satz mindestens ein Bremselement (16) weniger aufweist als der erste Satz, damit eine konstantere Gesamt-Verlangsamungskraft über den ersten und den zweiten Bereich (31,32) aufgebracht wird, als der erste Satz allein über den ersten und den zweiten Bereich (31,32) aufbringen würde,
**gekennzeichnet durch**
mindestens einen dritten Satz der Bremselemente (16), der über mindestens einen dritten Bereich von Anfangsgeschwindigkeiten (33) aktiviert wird, wobei die Anfangsgeschwindigkeiten im zweiten Bereich (32) größer sind als die Anfangsgeschwindigkeiten im dritten Bereich (33), wobei der dritte Satz mindestens ein Bremselement (16) weniger aufweist als der zweite Satz, damit eine konstantere Gesamt-Verlangsamungskraft über den ersten, zweiten und dritten Bereich (31,32,33) aufgebracht wird, als der erste oder der zweite Satz allein über den ersten, zweiten und dritten Bereich (31,32,33) aufbringen würde.

2. Vorrichtung nach Anspruch 1, bei der die Gesamt-Verlangsamungskraft um weniger als plus/minus 60 % von einer durchschnittlichen Gesamt-Verlangsamungskraft über den ersten und zweiten Bereich von Anfangsgeschwindigkeiten (31,32) abweicht.

3. Vorrichtung nach Anspruch 1, bei der die Gesamt-Verlangsamungskraft um weniger als plus/minus 30 % von einer durchschnittlichen Gesamt-Verlangsamungskraft über den ersten und zweiten Bereich von Anfangsgeschwindigkeiten (31,32) abweicht.

4. Vorrichtung nach Anspruch 1, bei der der erste Satz aktiviert wird, wenn die Anfangsgeschwindigkeit größer ist als eine erste vorbestimmte Geschwindigkeit (31).

5. Vorrichtung nach Anspruch 1, bei der die von jeder der mehreren Bremselemente (16) aufgebrachte Verlangsamungskraft ferner von einer Menge an von dem Bremselement (16) aufgenommener kinetischer Energie abhängt, wobei die Verlangsamungskraft mit steigender Menge sinkt und mit sinkender Menge steigt.

6. Vorrichtung nach Anspruch 1, bei der mindestens ein Bremselement (16) aktiviert oder deaktiviert wird, wenn sich die Masse nach Aktivierung des ersten, zweiten oder dritten Satzes (31,32,33) verlangsamt.

7. Vorrichtung nach Anspruch 1, bei der der erste Satz von Bremselementen (16) aktiviert wird, wenn die Anfangsgeschwindigkeit größer ist als eine erste vorbestimmte Geschwindigkeit (34), und der zweite Satz von Bremselementen (16) aktiviert wird, wenn die Anfangsgeschwindigkeit kleiner ist als die erste vorbestimmte Geschwindigkeit (34) und größer ist als eine zweite vorbestimmte Geschwindigkeit (35).

8. Vorrichtung nach Anspruch 1, bei der jedes Bremselement (16) mindestens ein mit der Masse (10) verbundenes Reibungselement (18) und mindestens ein mit der Radstruktur (14) verbundenes Reibungselement (20) aufweist und die Verlangsamungskraft durch Zusammendrücken der Reibungselemente (18,20) mit einer Kraft (P) erzeugt wird, wobei die Kraft (P) über den ersten und den zweiten Bereich (31,32) im we**sentlichen konstant ist.**

9. Vorrichtung nach Anspruch 1, bei der jedes der mehreren Bremselemente (16) zwei mit der Masse (10) verbundene Statoren (18), einen zwischen den Statoren (18) und an der Radstruktur (14) angeordneten einzelnen Rotor (20) und einen Aktuator (24) zum Drücken der Statoren (18) gegen den Rotor (20) aufweist.

10. Vorrichtung nach Anspruch 1, bei der mindestens ein erstes und ein zweites Bremselement (16) jeweils zwei Statoren (18) aufweisen, die mit der Masse (10) verbunden sind und einen zwischen den Statoren (18) und an der Radstruktur (14) angeordneten Rotor (20) gemeinsam nutzen, und einen Aktuator (24) zum unabhängigen Drücken von jeweils zwei Statoren (18) gegen den gemeinsamen Rotor (20) aufweisen.

11. Vorrichtung nach Anspruch 1, bei der mindestens ein Bremselement (16) aktiviert oder deaktiviert wird, wenn sich die Masse (10) nach Aktivierung des ersten oder zweiten Satzes verlangsamt.

12. Bremsverfahren zum Abbremsen einer Masse (10), die sich mit einer Anfangsgeschwindigkeit bewegt, und mehrerer sich drehender Radstrukturen (14), die mit der Masse (10) verbunden sind, mit folgenden Schritten:
Erzeugen einer auf die Masse (10) einwirkenden Gesamt-Verlangsamungskraft durch Aktivieren eines ersten Satzes von Bremselementen (16) über einen ersten Bereich von Anfangsgeschwindigkeiten (31) und eines zweiten Satzes von Bremselementen (16) über einen zweiten Bereich von Anfangsgeschwindigkeiten (32), wobei jedes Bremselement (16) bei Aktivierung eine Verlangsamungskraft auf die Masse (10) erzeugt, wobei die Verlangsamungskraft von einer Aktivierungskraft (P) und dem Reibungskoeffizienten (Mu) abhängt, der von der Anfangsgeschwindigkeit abhängig ist, derart, dass die Verlangsamungskraft mit sinkendem Reibungskoeffizienten (Mu), d. h. mit steigender Anfangsgeschwindigkeit, sinkt und derart, dass die Verlangsamungskraft mit steigendem Reibungskoeffizienten (Mu), d. h. mit sinkender Anfangsgeschwindigkeit, steigt, wobei der zweite Satz weniger Bremselemente (16) aufweist als der erste Satz, damit eine konstantere Gesamt-Verlangsamungskraft über den ersten und den zweiten Bereich (31,32) aufgebracht wird, als der erste Satz allein über den ersten und den zweiten Bereich (31,32) aufbringen würde,
**gekennzeichnet durch**
den Schritt des Aktivierens mindestens eines dritten Satzes der Bremselemente (16) über mindestens einen dritten Bereich von Anfangsgeschwindigkeiten (33), wobei die Geschwindigkeiten in dem zweiten Bereich (32) größer sind als die Geschwindigkeiten in dem dritten Bereich (33), wobei der dritte Satz mindestens ein Bremselement (16) weniger aufweist als der zweite Satz, damit eine konstantere Gesamt-Verlangsamungskraft über den ersten, zweiten und dritten Bereich (31,32,33) aufgebracht wird, als der erste oder der zweite Satz allein über den ersten, zweiten und dritten Bereich (31,32,33) aufbringen würde.

13. Verfahren nach Anspruch 12, bei dem die Gesamt-Verlangsamungskraft um weniger als plus/minus 60 % von einer durchschnittlichen Gesamt-Verlangsamungskraft über den ersten und zweiten Bereich von Anfangsgeschwindigkeiten (31,32) abweicht.

14. Verfahren nach Anspruch 12, bei dem die Gesamt-Verlangsamungskraft um weniger als plus/minus 30 % von einer durchschnittlichen Gesamt-Verlangsamungskraft über den ersten und zweiten Bereich von Anfangsgeschwindigkeiten (31,32) abweicht.

15. Verfahren nach Anspruch 12, ferner mit dem Schritt des Aktivierens des ersten Satzes, wenn die Anfangsgeschwindigkeit größer ist als eine erste vorbestimmte Geschwindigkeit (34).

16. Verfahren nach Anspruch 12, bei dem die von jeder der mehreren Bremselemente (16) aufgebrachte Verlangsamungskraft ferner von einer Menge an von dem Bremselement (16) aufgenommener kinetischer Energie abhängt, wobei die Verlangsamungskraft mit steigender Menge sinkt und mit sinkender Menge steigt.

17. Verfahren nach Anspruch 12, ferner mit dem Schritt des Aktivierens oder Deaktivierens von mindestens einem Bremselement (16), wenn sich die Masse (10) nach Aktivierung des ersten, zweiten oder dritten Satzes (31,32,33) verlangsamt.

18. Verfahren nach Anspruch 12, ferner mit den Schritten des Aktivierens des ersten Satzes von Bremselementen (16), wenn die Anfangsgeschwindigkeit größer ist als eine erste vorbestimmte Geschwindigkeit (34), und des Aktivierens des zweiten Satzes von Bremselementen (16), wenn die Anfangsgeschwindigkeit kleiner ist als die erste vorbestimmte Geschwindigkeit (34) und größer ist als eine zweite vorbestimmte Geschwindigkeit (35).

19. Verfahren nach Anspruch 12, bei dem jedes Bremselement (16) mindestens ein mit der Masse (10) verbundenes Reibungselement (18) und mindestens ein mit der Radstruktur (14) verbundenes Reibungselement (20) aufweist und die Verlangsamungskraft durch Zusammendrücken der Reibungselemente (18,20) mit einer Kraft (P) erzeugt wird, wobei die Kraft (P) über den ersten und den zweiten Bereich (31,32) im wesentlichen konstant ist.

20. Verfahren nach Anspruch 12, bei dem jedes der mehreren Bremselemente (16) zwei mit der Masse (10) verbundene Statoren (18), einen zwischen den Statoren (18) und an der Radstruktur (14) angeordneten einzelnen Rotor (20) und einen Aktuator (24) zum Drücken der Statoren (18) gegen den Rotor (20) aufweist.

21. Verfahren nach Anspruch 12, bei dem mindestens ein erstes und ein zweites Bremselement (16,36) jeweils zwei Statoren (18) aufweisen, die mit der Masse (10) verbunden sind und einen zwischen den Statoren (18) und an der Radstruktur (14) angeordneten Rotor (20) gemeinsam nutzen, und einen Aktuator (24) zum unabhängigen Drücken von jeweils zwei Statoren (18) gegen den gemeinsamen Rotor (20) aufweisen.

22. Verfahren nach Anspruch 12, ferner mit dem Schritt der Aktivierung oder Deaktivierung mindestens eines Bremselements (16), wenn sich die Masse (10) nach Aktivierung des ersten oder zweiten Satzes (31, 32) verlangsamt.

## Revendications

1. Dispositif de freinage pour ralentir une masse (10) se déplaçant avec une vitesse initiale, et une pluralité de structures rotatives à roues (14) fixées à la masse (10), comprenant :
une pluralité d'éléments de freinage (16), chacun de ladite pluralité d'éléments de freinage (16) générant une force de ralentissement sur la masse (10) lorsqu'il est activé, ladite force de ralentissement dépéndant d'une force d'activation (P) et du coefficient de frottement (Mu) qui dépend de la vitesse initiale, de manière que ladite force de ralentissement diminue lorsque le coefficient de frottement (Mu) diminue, c'est-à-dire, lorsque la vitesse initiale augmente, et de manière que ladite force de ralentissement augmente lorsque le coefficient de frottement (Mu) augmente, c'est-à-dire, lorsque la vitesse initiale diminue ;
dans lequel une force de ralentissement totale est générée en activant un premier jeu desdits éléments de freinage (16) si la vitesse initiale est comprise à l'intérieur d'une première plage de vitesses initiales (31), et un deuxième jeu d'éléments de freinage (16) si la vitesse initiale est comprise à l'intérieur d'une deuxième plage de vitesses initiales (32), les vitesses comprises à l'intérieur de ladite première plage (31) étant supérieures aux vitesses comprises à l'intérieur de ladite deuxième plage (32), ledit deuxième jeu comprenant au moins un élément de freinage (16) en moins que ledit premier jeu afin de fournir une force de ralentissement totale plus constante sur lesdites première et deuxième plages (31, 32) que celle que fournirait seul ledit premier jeu sur lesdites première et deuxième plages (31, 32),
**caractérisé en ce qu'**au moins un troisième jeu desdits éléments de freinage (16) est activé sur au moins une troisième plage de vitesses initiales (33), les vitesses initiales de ladite deuxième plage (32) étant supérieures aux vitesses initiales de ladite troisième plage (33), ledit troisième jeu comprenant au moins un élément de freinage (16) en moins que ledit deuxième jeu afin de fournir une force de ralentissement totale plus constante sur lesdites première, deuxième et troisième plages (31, 32, 33) que celle que fourniraient seuls lesdits premier ou deuxième jeux sur lesdites première, deuxième et troisième plages (31, 32, 33).

2. Dispositif selon la revendication 1, dans lequel ladite force de ralentissement totale a une variation inférieure à plus ou moins 60 % par rapport à une force de ralentissement totale moyenne fournie sur lesdites première et deuxième plages de vitesses initiales (31, 32).

3. Dispositif selon la revendication 1, dans lequel ladite force de ralentissement totale a une variation inférieure à plus ou moins 30 % par rapport à une force de ralentissement totale moyenne fournie sur lesdites première et deuxième plages de vitesses initiales (31, 32).

4. Dispositif selon la revendication 1, dans lequel ledit premier jeu est activé si la vitesse initiale est supérieure à une première vitesse prédéterminée (31).

5. Dispositif selon la revendication 1, dans lequel ladite force de ralentissement fournie par chacun de ladite pluralité d'éléments de freinage (16) dépend, en outre, d'une quantité d'énergie cinétique absorbée par ledit élément de freinage (16), ladite force de ralentissement diminuant lorsque ladite quantité augmente, et augmentant lorsque ladite quantité diminue.

6. Dispositif selon la revendication 1, dans lequel au moins un élément de freinage (16) est activé ou désactivé lorsque la masse ralentit après l'activation dudit premier, deuxième ou troisième jeu (31, 32, 33).

7. Dispositif selon la revendication 1, dans lequel ledit premier jeu d'éléments de freinage (16) est activé si ladite vitesse initiale est supérieure à une première vitesse prédéterminée (34), et ledit deuxième jeu d'éléments de freinage (16) est activé si ladite vitesse initiale est inférieure à ladite première vitesse prédéterminée (34), et supérieure à une deuxième vitesse prédéterminée (35).

8. Dispositif selon la revendication 1, dans lequel chaque élément de freinage (16) comprend au moins un élément de frottement (18) fixé à la masse (10), et au moins un élément de frottement (20) fixé à la structure à roues (14), et ladite force de ralentissement s'exerce en comprimant lesdits éléments de frottement (18, 20) ensemble avec une force (P), ladite force (P) étant globalement constante sur lesdites première et deuxième plages (31, 32).

9. Dispositif selon la revendication 1, dans lequel chacun de ladite pluralité d'éléments de freinage (16) comprend une paire de stators (18) fixés à la masse (10), et un rotor (20) unique fixé à la structure à roues (14) placé entre lesdits stators (18), et un dispositif d'actionnement (24) configuré de façon à amener lesdits stators (18) contre ledit rotor (20).

10. Dispositif selon la revendication 1, dans lequel au moins un premier élément de freinage (16) et un deuxième élément de freinage (16) comprennent chacun une paire de stators (18) fixés à la masse (10) et utilisant en commun un rotor (20) unique fixé à la structure à roues (14) placé entre lesdits stators (18), et un dispositif d'actionnement (24) configuré de façon à amener de manière indépendante chaque paire de stators (18) contre ledit rotor (20) utilisé en commun.

11. Dispositif selon la revendication 1, dans lequel au moins un élément de freinage (16) est activé ou désactivé lorsque la masse (10) ralentit après l'activation dudit premier ou deuxième jeu.

12. Procédé de freinage pour ralentir une masse (10) se déplaçant avec une vitesse initiale, et une pluralité de structures rotatives à roues (14) fixées à la masse (10), comprenant les étapes consistant à :
générer une force de ralentissement totale sur ladite masse (10) en activant un premier jeu d'éléments de freinage (16) sur une première plage de vitesses initiales (31) et un deuxième jeu d'éléments de freinage (16) sur une deuxième plage de vitesses initiales (32), chacun desdits éléments de freinage (16) générant une force de ralentissement sur la masse (10) lorsqu'il est activé, ladite force de ralentissement dépendant d'une force d'activation (P) et du coefficient de frottement (Mu) qui dépend de la vitesse initiale de manière que ladite force de ralentissement diminue lorsque le coefficient de frottement (Mu) diminue, c'est-à-dire, lorsque la vitesse initiale augmente, et de manière que ladite force de ralentissement augmente lorsque le coefficient de frottement augmente, c'est-à-dire, lorsque la vitesse initiale diminue, ledit deuxième jeu comprenant moins d'éléments de freinage (16) que ledit premier jeu afin de fournir une force de ralentissement totale plus constante sur lesdites première et deuxième plages (31, 32) que celle que fournirait seul ledit premier jeu sur lesdites première et deuxième plages (31, 32).
**caractérisé par** l'étape consistant à activer au moins un troisième jeu desdits éléments de freinage (16) sur au moins une troisième plage de vitesses initiales (33), les vitesses de ladite deuxième plage (32) étant supérieures aux vitesses de ladite troisième plage (33), ledit troisième jeu comprenant au moins un élément de freinage (16) en moins que ledit deuxième jeu afin de fournir une force de ralentissement totale plus constante sur lesdites première, deuxième et troisième plages (31, 32, 33) que celle que fourniraient seuls lesdits premier ou deuxième jeux sur lesdites première, deuxième et troisième plages (31, 32, 33).

13. Procédé selon la revendication 12, dans lequel ladite force de ralentissement totale a une variation inférieure à plus ou moins 60 % par rapport à une force de ralentissement totale moyenne fournie sur lesdites première et deuxième plages de vitesses initiales (31, 32).

14. Procédé selon la revendication 12, dans lequel ladite force de ralentissement totale a une variation inférieure à plus ou moins 30 % par rapport à une force de ralentissement totale moyenne fournie sur lesdites première et deuxième plages de vitesses initiales (31, 32).

15. Procédé selon la revendication 12 comprenant, en outre, l'étape d'activation dudit premier jeu si la vitesse initiale est supérieure à une première vitesse prédéterminée (34).

16. Procédé selon la revendication 12, dans lequel ladite force de ralentissement fournie par chacun d'une pluralité d'éléments de freinage (16) dépend, en outre, d'une quantité d'énergie cinétique absorbée par ledit élément de freinage (16), ladite force de ralentissement diminuant lorsque ladite quantité augmente, et augmentant lorsque ladite quantité diminue.

17. Procédé selon la revendication 12, comprenant, en outre, l'étape consistant à activer ou désactiver au moins un élément de freinage (16) lorsque la masse (10) ralentit après l'activation dudit premier, deuxième ou troisième jeu (31, 32, 33).

18. Procédé selon la revendication 12, comprenant, en outre, les étapes consistant à activer ledit premier jeu d'élément de freinage (16) si ladite vitesse initiale est supérieure à une première vitesse prédéterminée (34), et à activer ledit deuxième jeu d'élément de freinage (16) si ladite vitesse initiale est inférieure à ladite première vitesse prédéterminée (34), et supérieure à une deuxième vitesse prédéterminée (35).

19. Procédé selon la revendication 12, dans lequel chaque élément de freinage (16) comprend, au moins, un élément de frottement (18) fixé à la masse (10) et, au moins, un élément de frottement (20) fixé à la structure à roues (14), et ladite force de ralentissement s'exerce en comprimant lesdits éléments de frottement (18, 20) ensemble avec une force (P), ladite force (P) étant globalement constante sur lesdites première et deuxième plages (31, 32).

20. Procédé selon la revendication 12, dans lequel chacun de ladite pluralité d'éléments de freinage (16) comprend une paire de stators (18) fixés à la masse (10) et un rotor (20) unique fixé à la structure à roues (14) placé entre lesdits stators, et un dispositif d'actionnement (24) configuré de façon à amener lesdits stators (18) contre ledit rotor (20).

21. Procédé selon la revendication 12, dans lequel au moins un premier élément de freinage (16) et un deuxième élément de freinage (36) comprennent chacun une paire de stators (18) fixés à la masse (10) et utilisant en commun un rotor (20) unique fixé à la structure à roues (14) placé entre lesdits stators (18), et un dispositif d'actionnement (24) configuré de façon à amener de manière indépendante chaque paire de stators (18) contre ledit rotor (20) utilisé en commun.

22. Procédé selon la revendication 12, comprenant, en outre, l'étape consistant à activer ou désactiver au moins un élément de freinage (16) lorsque la masse (10) ralentit après l'activation dudit premier ou deuxième jeu (31, 32).
